# EUROPEAN PATENT APPLICATION

(11) **EP 4 386 968 A1**
(43) Date of publication of application: **19.06.2024**
(21) Application number: 23192102.4
(22) Date of filing: 18.08.2023
(51) Int. Cl.: H01M 50/507, H01M 50/517, H01M 50/522

(54) **BUSBAR ASSEMBLY AND CELL MODULE**

(30) Priority: 13.12.2022 CN 202223357004 U
(71) Applicant: AESC Japan Ltd., Kanagawa, 2520012 (JP)
(72) Inventor: Yulong, BAI, Jiangyin City, Wuxi City (CN); Yafei, HE, Jiangyin City, Wuxi City, (CN); Zhiqi, SONG, Jiangyin City, Wuxi City (CN)
(74) Representative: Becker, Eberhard

(57) **Abstract**

The disclosure provides a busbar assembly (H) and a cell module. The busbar assembly (H) includes a busbar bracket (110), a conductive member (200), and a tab lead-out slit (310). The busbar bracket (110) has a first side (A) and a second side (B) facing away from each other. The conductive member (200) is arranged on the busbar bracket (110). The tab lead-out slit (310) extends from the first side (A) to the second side (B) and passes through the busbar bracket (110). The tab lead-out slit (310) has two opposite lead-out walls (301, 302), and at least one of the lead-out walls (301, 302) is formed on the conductive member (200).

## Description

### Technical Field

The disclosure relates to the technical field of batteries, and in particular, relates to a busbar assembly and a cell module.

### Description of Related Art

A cell module is integrated with a plurality of cells, and the electrodes of each cell are collectively connected through the busbar assembly.

At present, when the electrodes are to be assembled, the tabs of the electrodes are required to be inserted into the busbar bracket, and the tabs are then connected to the conductive member on the busbar bracket by means of welding or the like. However, in the related art, after the tabs are inserted into the busbar bracket, it is often difficult for the tabs to fully contact the conductive member, resulting in poor welding effect and unreliable electrical connection between the tabs and the conductive member.

### SUMMARY

In view of the abovementioned shortcomings of the related art, the disclosure aims to provide a busbar assembly and a cell module to improve the reliability of the electrical connection between a tab and a conductive member.

To achieve the above, the following technical solutions are provided by the disclosure.

The disclosure provides a busbar assembly including a busbar bracket, a conductive member, and a tab lead-out slit.

The busbar bracket has a first side and a second side facing away from each other.

The conductive member is arranged on the busbar bracket.

The tab lead-out slit extends from the first side to the second side and passes through the busbar bracket. The tab lead-out slit has two opposite lead-out walls, and at least one of the lead-out walls is formed on the conductive member.

Optionally, the two lead-out walls of the tab lead-out slit include a first lead-out wall and a second lead-out wall. The first lead-out wall is formed on the conductive member, and the second lead-out wall is formed on the busbar bracket.

Optionally, the busbar bracket is provided with a slot, and the slot includes a first side wall and a second side wall opposite to each other. The conductive member passes through the slot and is attached to the first side wall or the second side wall. The first lead-out wall is formed on a surface of the conductive member facing the second side wall or the first side wall. The second lead-out wall is formed on the second side wall or the first side wall of the slot.

Optionally, the busbar bracket is provided with a plurality of slots arranged side by side. The conductive member includes a first conductive member, the first conductive member is arranged in at least one of the slots, and the first conductive member only penetrates through one of the slots.

Optionally, the slot provided with the first conductive member is the outermost slot on the busbar bracket.

Optionally, the first conductive member includes a main body portion and a first bent portion. The main body portion passes through the slot. The first bent portion is connected to the main body portion, arranged on the first side of the busbar bracket, and bent relative to the main body portion in a direction away from the slot.

Optionally, the busbar bracket is provided with at least two of the slots arranged side by side. The conductive member includes a second conductive member, and the second conductive member extends into the two adjacent slots. Two of the tab lead-out slits are formed between the second conductive member and the busbar bracket.

Optionally, a positioning portion is provided between the two adjacent slots. The second conductive member has a mounting portion fixed onto the positioning portion. The positioning portion and the mounting portion are arranged in sequence in a direction from the first side to the second side. The second conductive member has a second bent portion and a third bent portion arranged on the first side of the busbar bracket and bent relative to the mounting portion. The second bent portion penetrates through one of the slots, and the third bent portion penetrates through the other adjacent slot. Each bent portion forms an angle less than 90° with the mounting portion.

Optionally, the second lead-out wall is connected to a guide portion, and the guide portion is located on the first side of the busbar bracket. A guide groove is formed between the guide portion and the corresponding bent portion, and a groove width of the guide groove gradually decreases in the direction from the first side to the second side.

Optionally, the conductive member further includes a flange portion connected to the corresponding bent portion. The flange portion is folded from the first side to the second side, and a circular arc transition is provided between the flange portion and the corresponding bent portion.

Optionally, the conductive member is a copper bar, an aluminum bar, or an aluminum-copper composite bar.

Correspondingly, the disclosure further provides a cell module including a busbar assembly and a cell.

The busbar assembly has the busbar assembly according to the above.

The cell has a tab inserted into the tab lead-out slit. At least one tab is inserted into each of the tab lead-out slit, and the tab is connected to the conductive member.

In the disclosure, since at least one lead-out wall of the tab lead-out slit is formed on the conductive member, when the tab is inserted into the corresponding lead-out slit, the tab fully contacts the conductive member, and the reliability of the electrical connection between the two is improved.

### BRIEF DESCRIPTION OF THE DRAWINGS

FIG. 1 is an exploded view of a cell module according to an embodiment of the disclosure.
FIG. 2 is a schematic view of an exemplary structure of a busbar assembly in FIG. 1.
FIG. 3 is a schematic structural view of a conductive member in FIG. 2.
FIG. 4 is a schematic view of a busbar bracket in FIG. 2 provided with a slot.
FIG. 5 is a schematic view of an internal structure of a tab lead-out slit formed in the busbar assembly of FIG. 2.
FIG. 6 is a schematic view of another exemplary structure of the busbar assembly according to the disclosure.
FIG. 7 is a schematic structural view of the busbar assembly in FIG. 6 from another viewing angle.
FIG. 8 is a schematic view of the busbar bracket in FIG. 6 provided with slots.
FIG. 9 is a schematic view of the internal structure of the tab lead-out slit formed in the busbar assembly of FIG. 6.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification.

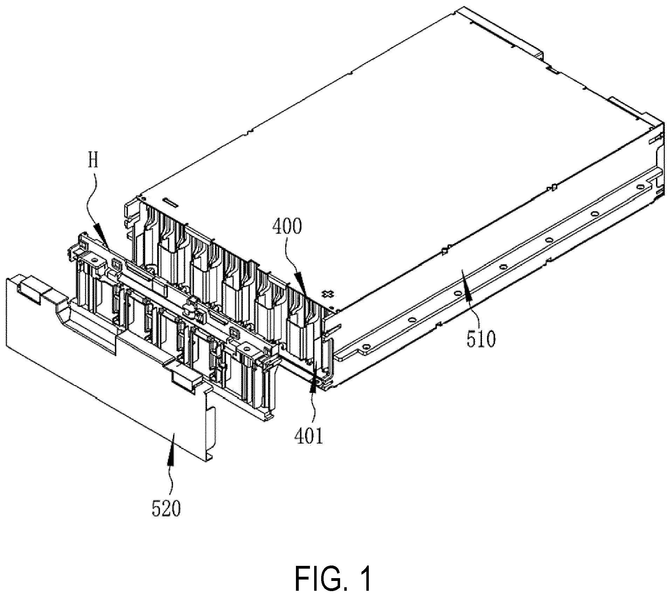

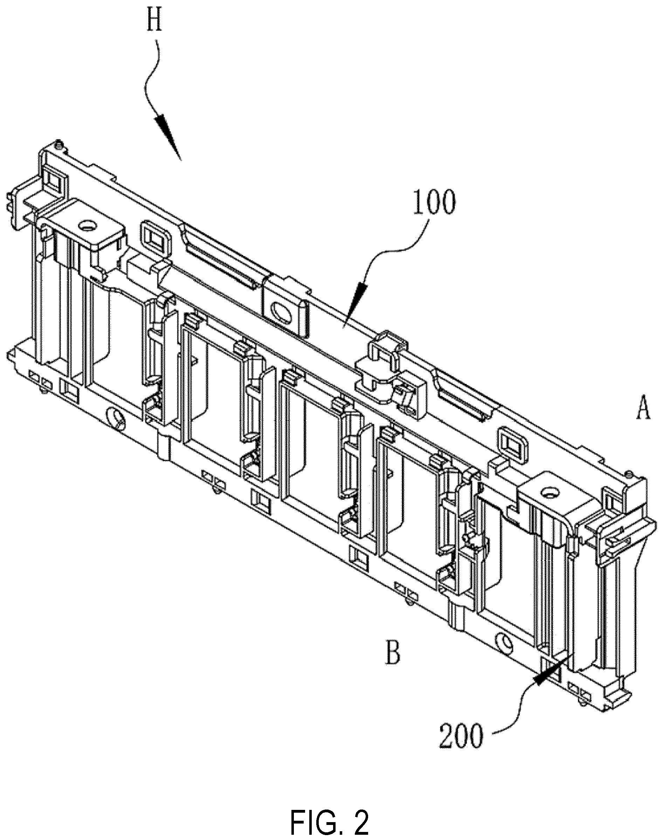

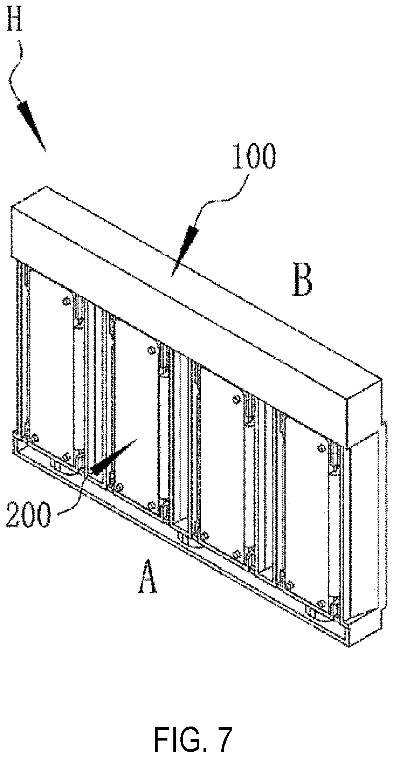

All of the busbar assembly provided in the following embodiments are capable of being applied to a cell module. With reference to FIG. 1, the cell module includes a cell 400 and any busbar assembly in the following embodiments. With reference to FIG. 2 to FIG. 9 together, the cell 400 has a tab 401 that fits and inserted into a tab lead-out slit 310, and the tab 401 is connected to a conductive member 200 in the busbar assembly.

In the embodiment shown in FIG. 1, the cell module further includes a housing, and the housing includes a detachably-connected main housing 510 and an outer cover 520. Each cell 400 is arranged in the main housing 510. Further, one end of the main housing 510 corresponding to the outer cover 520 is provided with a busbar assembly H, so that the tab 401 of the cell 400 in the main housing 510 can be connected to the conductive member 200 in the busbar assembly. The outer cover 520 covers the busbar assembly and can protect the busbar assembly.

With reference to FIG. 2 to FIG. 9, the busbar assembly H of the disclosure includes a busbar bracket 100, the conductive member 200, and a tab lead-out slit 310. The busbar bracket 100 has a first side A and a second side B facing away from each other. The conductive member 200 is arranged on the busbar bracket 100. The tab lead-out slit 310 extends from the first side A to the second side B and passes through the busbar bracket 100. The tab lead-out slit 310 has two opposite lead-out walls, and at least one of the lead-out walls is formed on the conductive member 200.

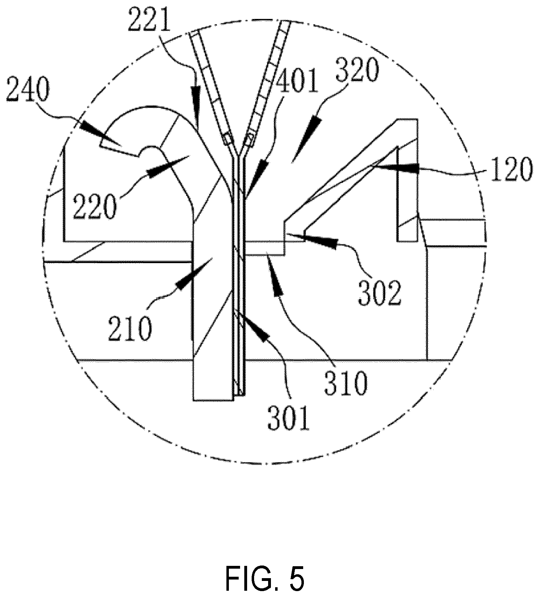

For ease of understanding, a first lead-out wall 301 and a second lead-out wall 302 in FIG. 5, FIG. 8, and FIG. 9 all belong to the lead-out walls described herein. Besides, when the tab 401 is inserted into the tab lead-out slit 310, it is equivalent to inserting the tab 401 from the first side A to the second side B. The conductive member is usually a copper bar, and in actual implementation, the conductive member 200 can also be an aluminum bar or an aluminum-copper composite bar and can even be made of silver, gold, or related alloy materials, as long as it has sufficient conductivity.

It should be noted that "at least one of the lead-out walls is formed on the conductive member" in the above description may refer to the situation that the lead-out wall is directly formed on the conductive member, and reference may be made to the examples in FIG. 2 to FIG. 9 for details. It can also mean that the component is provided on the conductive member, and the lead-out wall is arranged on the component. For instance, an insulating member may be disposed on the conductive member, and the lead-out wall is formed on the insulating member (not shown).

In the disclosure, since at least one lead-out wall of the tab lead-out slit 310 is formed on the conductive member 200, when the tab 401 is inserted into the corresponding lead-out slit 310, the tab 401 can easily contact the lead-out wall. That is to make the tab 401 fully contact the conductive member 200, no matter the connection between the conductive member 200 and the tab 401 is by welding or other methods, the reliability of the connection between the two is improved.

In some embodiments, both lead-out walls of the tab lead-out slit are formed on the conductive member (not shown). With such a structure, no matter which side of the lead-out wall the tab contacts when the tab is inserted into the lead-out slit, it means that the tab is in contact with the conductive member. Therefore, in this way, it is more conducive to sufficient contact between the tab and the conductive member, and the possibility of invalid connection between the conductive member and the tab is lower.

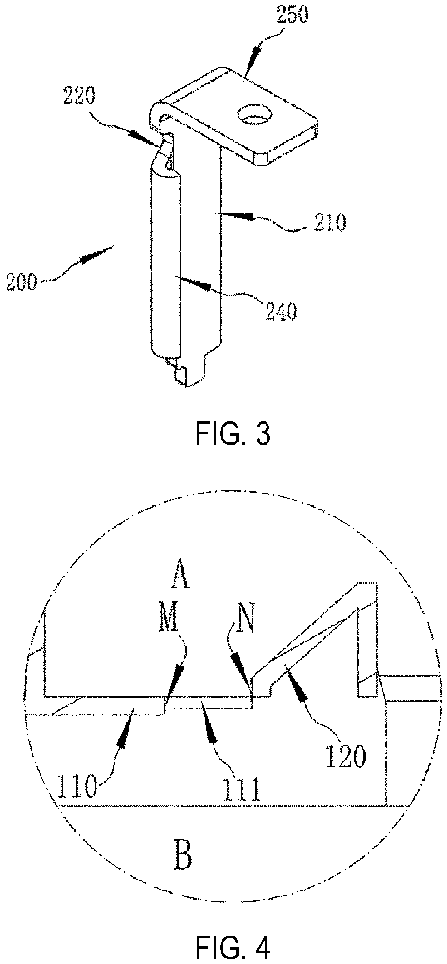

In some other embodiments, with reference to FIG. 4 to FIG. 5, FIG. 8, and FIG. 9, the two lead-out walls of the tab lead-out slit 310 include the first lead-out wall 301 and the second lead-out wall 302. The first lead-out wall 301 is formed on the conductive member 200, and the second lead-out wall 302 is formed on the busbar bracket 100. Compared to the method in which both lead-out walls are formed on the conductive member 200, in this method, the structure of the conductive member 200 is simpler and the costs are lower.

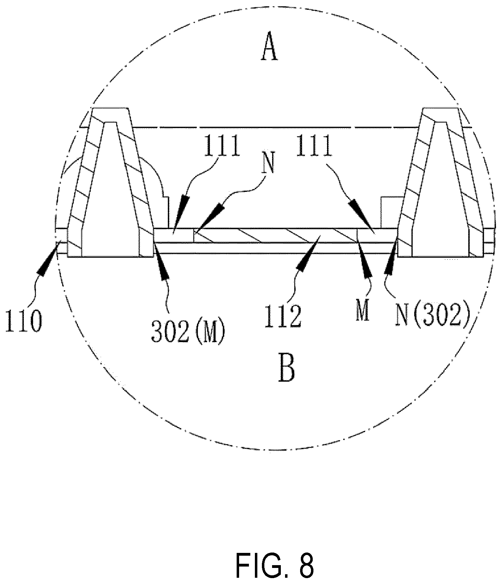

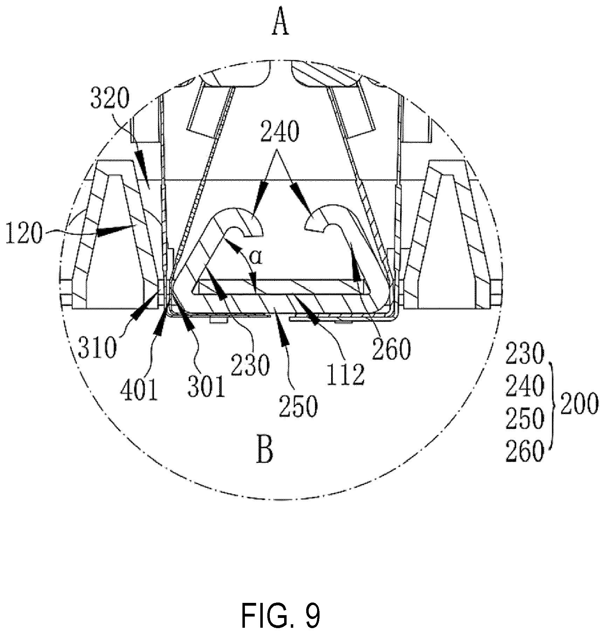

To be specific, in some embodiment, with reference to FIG. 4, FIG. 5, FIG. 8, and FIG. 9 again, the busbar bracket 100 is provided with a slot 111, and the slot 111 includes a first side wall M and a second side wall N opposite to each other. In FIG. 4 and FIG. 8, in each slot 111, a left side wall is treated as the first side wall M, and a right side wall is treated as the second side wall N. The conductive member 200 passes through the slot 111. With reference to the structure corresponding to the slot on the right side of FIG. 9 and the structure in FIG. 5, the conductive member 200 is attached to the first side wall M. The first lead-out wall 301 is formed on a surface of the conductive member 200 facing the second side wall N, and the second lead-out wall 302 is formed on the second side wall N of the slot 111. In actual implementation, with reference to the structure corresponding to the slot on the left side in FIG. 8 and FIG. 9, when the conductive member 200 passes through the slot 111, it can also be attached to the second side wall N. Correspondingly, the first lead-out wall 301 is formed on a surface of the conductive member 200 facing the first side wall M, and the second lead-out wall 302 is formed on the first side wall M of the slot 111. Certainly, to achieve "one of the lead-out walls is formed on the conductive member", it is not necessary to arrange the conductive member to penetrate through the slot, and the conductive member may also be arranged directly beside the slot.

It should be noted that "attached to" in the above description may refer to any situation in which the conductive member 200 is fixed to, closely attached to, or close to the first side wall or the second side wall.

During actual implementation, it is preferred that the conductive member 200 penetrates through the slot 111. In this way, when the busbar assembly with this structure is applied to the cell module, it is equivalent to inserting both the conductive member 200 and the tab 401 into the slot 111. In the case that the conductive member 200 is deformed or exhibits low working accuracy due to various reasons, the conductive member 200 may always be restricted in the slot 111, and the deformation is limited. As such, the reliability of the connection between the tab 401 inserted into the slot 111 and the conductive member 200 may be further improved.

Different implementations of the conductive member 200 passing through the slot 111 are described in detail as follows.

In some embodiments, with reference to FIG. 2 to FIG. 5 together, the busbar bracket 100 is provided with a plurality of slots 111 arranged side by side. The conductive member 200 includes a first conductive member, the first conductive member is arranged in at least one of the slots 111, and the first conductive member only penetrates through one of the slots 111. In FIG. 2, the slot 111 provided with the first conductive member is the outermost slot 111 on the busbar bracket 100, and the outermost slot herein may correspond to the two ends of the busbar bracket 100 in the figure. In FIG. 2, two slots 111 are individually distributed at two ends of the busbar bracket 100.

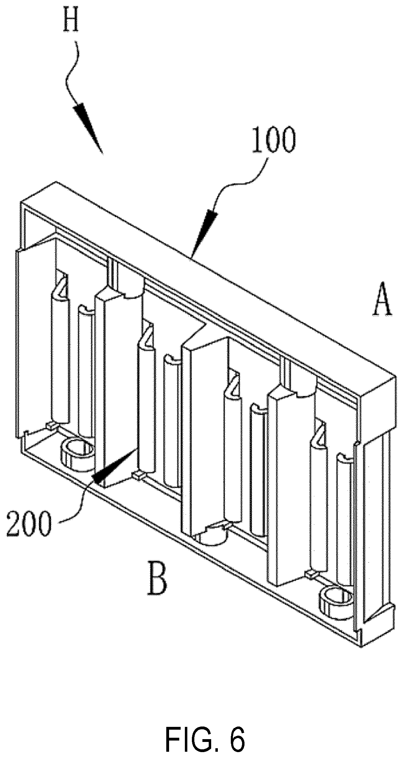

In some other embodiments, with reference to FIG. 6 to FIG. 9, the busbar bracket 100 is provided with at least two of the slots 111 arranged side by side. The conductive member 200 includes a second conductive member, and the second conductive member extends into the two adjacent slots 111. Two of the tab lead-out slits 310 are formed between the single-piece second conductive member and the busbar bracket 100. With such a structure, the single-piece conductive member 200 can be used to form two of the tab lead-out slits 310, and the communication and confluence between the tabs 401 inserted in two corresponding adjacent slots 111 are achieved without additional busbar components. The structure is further simplified, which is more conducive to cost reduction.

In actual implementation (not shown), the first conductive member and the second conductive member may also be arranged on the busbar bracket 100 together. In this case, the busbar bracket 100 is provided with a plurality of slots 111, and each first conductive member correspondingly extends into the corresponding slot. Generally, if both the first conductive member and the second conductive member are arranged on the busbar bracket 100, the first conductive member is on the outermost side, and the second conductive member is arranged in the middle.

Regardless of whether the single-piece conductive member 200 penetrates through only one slot 111, or the same conductive member 200 extends out of two slots 111, the conductive member 200 can be a bent plate. When the conductive member 200 adopts a bent plate, its own weight and structure are relatively low and simple, and costs are thereby reduced. The conductive member 200 may also not use a bent plate. In the following, the conductive member 200 being in a form of a bent plate and the two modes of the single-piece conductive member 200 passing through only one slot 111 as well as extending into two slots 111 at the same time are specifically described in detail.

For the example where the single-piece conductive member 200 only penetrates through one slot 111, with reference to FIG. 4 and FIG. 5, the first conductive member is a bent plate, and the first conductive member includes a main body portion 210 and a first bent portion 220. The first lead-out wall 301 is formed on the main body portion 210, and the main body portion 210 passes through the slot 111. The first bent portion 220 is connected to the main body portion 210, arranged on the first side (i.e., side A) of the busbar bracket 100, and bent relative to the main body portion 210 in a direction away from the slot 111.

In this structure, the first bent portion 220 has a guiding function. To be specific, when the tab 401 is inserted into the tab lead-out slit 310 from the first side A to the second side B, the tab 401 may first pass through the position corresponding to the first bent portion 220 and then enter the tab lead-out slit 310. Therefore, the tab 401 may be inserted against the first conductive member, and the first bent portion 220 contacts the first lead-out wall 301. In this case, the first bent portion 220 can guide the tab 401.

With reference to FIG. 3, the conductive member 200 may also be bent to form a mounting portion 250. The mounting portion 250 is attached to one surface of the busbar bracket 100. The connection between the mounting portion 250 and the busbar bracket 100 may be achieved through a fastener or through clamping, so that the conductive member 200 may be reliably mounted onto the busbar bracket 100.

For an example where the same conductive member 200 extends out of two slots 111, with reference to FIG. 8 and FIG. 9, the second conductive member is a bent plate, and a positioning portion 112 is provided between the two slots 111. The second conductive member has the mounting portion 250 fixed onto the positioning portion 112. The positioning portion 112 and the mounting portion 250 are arranged in sequence in a direction from the first side A to the second side B. The second conductive member has a second bent portion 230 and a third bent portion 260 arranged on the first side (side A) of the busbar bracket 100 and bent relative to the mounting portion 250. The second bent portion 230 penetrates through one of the slots 111, and the third bent portion 260 penetrates through the other adjacent slot 111. Each bent portion forms an angle α less than 90° with the mounting portion 250.

In FIG. 9, α=60°, and in actual implementation, the value of the angle α can be any value less than 90°.

In this structure, when each tab 401 is inserted into the corresponding tab lead-out slit 310, the second bent portion 230 or the third bent portion 260 guide the corresponding tab 401. In this manner, the positioning portion 112 and the mounting portion 250 may also be connected by a fastener.

In order to enable the tab 401 to enter the tab lead-out slit 310 more smoothly, with reference to FIG. 4, FIG. 5, FIG. 8, and FIG. 9, regardless of whether the same conductive member 200 extends into only one slot 111 or the same conductive member 200 extends into the two adjacent slots 111, an additional guide portion 120 can be provided on the busbar bracket 100.

To be specific, with reference to FIG. 2 to FIG. 5 together and FIG. 6 to FIG. 9 together, in some embodiments, the second lead-out wall 302 is connected to the guide portion 120, and the guide portion 120 is located on the first side (side A) of the busbar bracket 100. A guide groove 320 is formed between the guide portion 120 and the corresponding bent portion, and a groove width of the guide groove 320 gradually decreases in the direction from the first side A to the second side B.

In this structure, the tab 401 first passes through the guide groove 320 before entering the tab outlet slit 310. The guide groove 320 exhibits a guiding function, enabling the tab 401 to enter the narrow tab lead-out slit 310 smoothly.

In some embodiments, with reference to FIG. 5 and FIG. 9, the conductive member 200 further includes a flange portion 240 connected to the corresponding bent portion. The flange portion 240 is folded from the first side to the second side, and a circular arc transition is provided between the flange portion 240 and the corresponding bent portion. With this structure, when the cell module is squeezed, since the conductive member 200 has the flange portion 240, the sharp edge of the corresponding bent portion may be prevented from crushing the cell 400 and causing loss of control of the cell 400.

In some embodiment, with reference to FIG. 4 and FIG. 5 and FIG. 8, and FIG. 9, the busbar bracket 100 includes a busbar substrate 110, and the slot 111 is arranged on the busbar substrate 110.

Herein, with reference to FIG. 8 and FIG. 9, the positioning portion 112 described above may also belong to a portion of the busbar substrate 110.

## Claims

1. A busbar assembly (H), comprising:
a busbar bracket (110) having a first side (A) and a second side (B) facing away from each other;
a conductive member (200) arranged on the busbar bracket (110); and
a tab lead-out slit (310) extending from the first side (A) to the second side (B) and passing through the busbar bracket (110), wherein the tab lead-out slit (310) has two opposite lead-out walls (301, 302), at least one of the lead-out walls (301, 302) is formed on the conductive member (200).

2. The busbar assembly (H) according to claim 1, wherein the two lead-out walls (301, 302) of the tab lead-out slit (310) comprise a first lead-out wall (301) and a second lead-out wall (302), the first lead-out wall (301) is formed on the conductive member (200), and the second lead-out wall (302) is formed on the busbar bracket (110).

3. The busbar assembly (H) according to claim 1 or 2, wherein the busbar bracket (110) is provided with a slot (111), the slot (111) comprises a first side wall and a second side wall opposite to each other, the conductive member (200) passes through the slot (111) and is attached to the first side wall or the second side wall, the first lead-out wall (301) is formed on a surface of the conductive member (200) facing the second side wall or the first side wall, and the second lead-out wall (302) is formed on the second side wall or the first side wall of the slot (111).

4. The busbar assembly (H) according to any one of claims 1 to 3, wherein the busbar bracket (110) is provided with a plurality of slots (111) arranged side by side, the conductive member (200) comprises a first conductive member (200), the first conductive member (200) is arranged in at least one of the slots (111), and the first conductive member (200) only penetrates through one of the slots (111).

5. The busbar assembly (H) according to any one of claims 1 to 4, wherein the slot (111) provided with the first conductive member (200) is the outermost slot (111) on the busbar bracket (110).

6. The busbar assembly (H) according to any one of claims 1 to 5, wherein the first conductive member (200) comprises a main body portion (210) and a first bent portion (220), the main body portion (210) passes through the slot (111), and the first bent portion (220) is connected to the main body portion (210), arranged on the first side (A) of the busbar bracket (110), and bent relative to the main body portion (210) in a direction away from the slot (111).

7. The busbar assembly (H) according to any one of claims 1 to 6, wherein the busbar bracket (110) is provided with at least two of the slots (111) arranged side by side, the conductive member (200) comprises a second conductive member (200), the second conductive member (200) extends into the two adjacent slots (111), and two of the tab lead-out slits (310) are formed between the single-piece second conductive member (200) and the busbar bracket (110).

8. The busbar assembly (H) according to any one of claims 1 to 7, wherein a positioning portion (112) is provided between the two adjacent slots (111), the second conductive member (200) has a mounting portion (250) fixed onto the positioning portion (112), the positioning portion (112) and the mounting portion (250) are arranged in sequence in a direction from the first side (A) to the second side (B), the second conductive member (200) has a second bent portion (230) and a third bent portion (260) arranged on the first side (A) of the busbar bracket (110) and bent relative to the mounting portion (250), the second bent portion (230) penetrates through one of the slots (111), the third bent portion (260) penetrates through the other adjacent slot (111), and each bent portion (220, 230, 260) forms an angle less than 90° with the mounting portion (250).

9. The busbar assembly (H) according to any one of claims 1 to 8, wherein the second lead-out wall (302) is connected to a guide portion (120), the guide portion (120) is located on the first side (A) of the busbar bracket (110), a guide groove (320) is formed between the guide portion (120) and the corresponding bent portion (230, 260), and a groove width of the guide groove (320) gradually decreases in the direction from the first side (A) to the second side (B).

10. The busbar assembly (H) according to any one of claims 1 to 9, wherein the conductive member (200) further comprises a flange portion (240) connected to the corresponding bent portion (220, 230, 260), the flange portion (240) is folded from the first side (A) to the second side (B), and a circular arc transition is provided between the flange portion (240) and the corresponding bent portion (220, 230, 260).

11. The busbar assembly (H) according to any one of claims 1 to 10, wherein the conductive member (200) is a copper bar, an aluminum bar, or an aluminum-copper composite bar.

12. A cell module, comprising:
a busbar assembly (H) having the busbar assembly (H) according to any one of claims 1 to 11; and
a cell (400) having a tab (401) inserted into the tab lead-out slit (310), at least one tab (401) is inserted into each of the tab lead-out slit (310), and the tab (401) is connected to the conductive member (200).
